# EUROPEAN PATENT APPLICATION

(11) **EP 4 083 310 A1**
(43) Date of publication of application: **02.11.2022**
(21) Application number: 20905216.6
(22) Date of filing: 25.12.2020
(51) Int. Cl.: D06M 15/572, B32B 27/12, B32B 27/40, C08G 18/44

(54) **MOISTURE-PERMEABLE WATERPROOF FABRIC**

(30) Priority: 26.12.2019 JP 2019237455
(71) Applicant: Toray Coatex Co., Ltd., Kyoto-shi, Kyoto 601-8324 (JP); Toray Industries, Inc., Tokyo 103-8666 (JP)
(72) Inventor: YAMADA, Kohei, Kyoto-shi, Kyoto 601-8324 (JP); OKUMURA, Kaori, Kyoto-shi, Kyoto 601-8324 (JP); NAKAYA, Yohei, Tokyo 103-8666 (JP); UEDA, Takehiro, Osaka-shi, Osaka 530-8222 (JP)
(74) Representative: Mewburn Ellis LLP
(86) International application number: PCT/JP2020/048976
(87) International publication number: WO 2021/132657

(57) **Abstract**

Provided is a moisture-permeable waterproof fabric that can reduce the environmental load through carbon neutrality and longer product life and has excellent waterproof properties and moisture permeability. The moisture-permeable waterproof fabric according to the present invention is a moisture-permeable waterproof fabric including a porous moisture-permeable waterproof membrane on at least one surface of a fabric, in which polyurethane forming the moisture-permeable waterproof membrane is synthesized using a polyol including a polycarbonate diol having plant-derived components.

## Description

### Field

The present invention relates to a moisture-permeable waterproof fabric having a moisture-permeable waterproof membrane made of polyurethane.

### Background

Conventionally, a moisture-permeable waterproof fabric having a polyurethane moisture-permeable waterproof membrane excellent in moisture permeability and waterproof properties has been proposed for applications such as sports clothing and outdoor products.

For example, Patent Literature 1 has disclosed a porous structure of a polyurethane resin made of a polycarbonate diol including a diol component having a carbon number of 4 to 6 as a constituent and isocyanate, and has described that the porous structure has an excellent balance between moisture permeability and water resistance.

Patent Literature 2 has disclosed a waterproof-processed fabric having a waterproof layer made of a polyurethane resin obtained from a plant-derived castor oil-based polyol polyester diol, and has described that the waterproof-processed fabric has excellent hydrolysis resistance, while including plant-derived components.

In addition, Patent Literature 3 has disclosed a moisture-permeable waterproof fabric provided with a porous resin membrane made of ester-based urethane obtained from a plant-derived sebacic acid and a diol, and has described that the moisture-permeable waterproof fabric has the same or better performance than performance when petroleum-derived polyurethane is used.

### Citation List

### Patent Literature

[Patent Literature 1] Japanese Patent Application Laid-open No. H5-186631
[Patent Literature 2] Japanese Patent No. 5855722
[Patent Literature 3] Japanese Patent No. 5680052 Summary

### Technical Problem

The technology of Patent Literature 1, however, provides insufficient water resistance and moisture permeability, and at the same time has significant environmental impact due to the use of petroleum-derived materials.

In addition, the technology of Patent Literature 2 has low water pressure resistance as described in Examples 1 to 3 of Patent Literature 2, and thus a top coat had been necessary to be applied in order to obtain the water pressure resistance required for practical use. The top coating, however, has had a problem of causing a significant decrease in the moisture permeability, as described in Example 4. In addition, in the process of refining a polyether polyester diol from castor oil, the castor oil has been mixed as an impurity, and thus an unpleasant castor oil odor has been generated in the product, which has been undesirable for clothing. In addition, there has been a problem of unstable polymerization of polyurethane caused by mixing with castor oil serving as the impurity.

Furthermore, the technology of Patent Literature 3 has used the ester-based polyurethane, and thus there has been a problem of early deterioration in the moisture-permeable waterproof membrane due to hydrolysis.

The present invention is made in view of the above problems, and an object of the present invention is to provide a moisture-permeable waterproof fabric that can reduce the environmental load through carbon neutrality and longer product life and has excellent waterproof properties and moisture permeability by forming a moisture-permeable waterproof membrane from a polycarbonate-based urethane resin including plant-derived components.

### Solution to Problem

The present invention is a moisture-permeable waterproof fabric including: a porous moisture-permeable waterproof membrane on at least one surface of a fabric. Polyurethane forming the moisture-permeable waterproof membrane is synthesized using a polyol including a polycarbonate diol having a plant-derived component. Advantageous Effects of Invention

According to the present invention, a moisture-permeable waterproof fabric that can reduce the environmental load through carbon neutrality and longer product life and has excellent waterproof properties and moisture permeability.

### Description of Embodiments

Subsequently, the moisture-permeable waterproof fabric according to the present invention will be described in detail.
The moisture-permeable waterproof fabric according to the present invention is a moisture-permeable waterproof fabric having a porous moisture-permeable waterproof membrane on at least one surface of the fabric, and the polyurethane forming the moisture-permeable waterproof membrane is synthesized using a polyol including a polycarbonate diol having plant-derived components.

### (Fabric)

As a fabric used for the moisture-permeable waterproof fabric, a fabric suitable for intended use and the like can be appropriately used. Although the kinds of the fabric are not particularly limited, examples of the fiber include synthetic fibers such as a nylon fiber, a polyester fiber, a polyamide fiber, semi-synthetic fibers such as an acetate fiber; and natural fibers such as cotton, hemp, and wool. These kinds of fibers may be used singly or may be used in combination of two or more of them. In addition, the structure of the fabric is not particularly limited, and woven, knitted, or non-woven fabrics can be appropriately used. Use of a recycled polyester yarn, a recycled nylon yarn, or a yarn including plant-derived components is preferably used in the fabric from the viewpoint of reduction in the environmental load.

### (Moisture-permeable waterproof membrane)

The moisture-permeable waterproof membrane of the moisture-permeable waterproof fabric is made of the polyurethane using a polyol including a polycarbonate diol having plant-derived components.

From the viewpoint of chemical resistance, low-temperature properties, and hydrolysis resistance, the polycarbonate diol including at least two kinds of diols is preferably used as the polycarbonate diol having plant-derived components according to the present invention, and at least one of the two kinds of diols is preferably a plant-derived component. The polycarbonate diols including two kinds of diols can be produced by polycondensation of the two kinds of diols with a carbonate compound by an ester exchange reaction.

As the polycarbonate diol including two kinds of diols, for example, a polycarbonate diol that includes a diol having an alkylene group having a carbon number of 3 to 5 and a diol having an alkylene group having a carbon number of 8 to 20 as constituents can be preferably used.

Examples of the diol having an alkylene group having a carbon number of 3 to 5 include 1,3-propanediol, 2-methyl-1,3-propanediol, 1,3-butanediol, 1,4-butanediol, 2-methyl-1,4-butanediol, and 1,5-pentanediol. Of these diols, 1,3-propanediol, 1,4-butanediol, and 1,5-pentanediol are preferable and 1,3-propanediol and 1,4-butanediol are more preferable due to excellent balance between chemical resistance and low-temperature properties when the polyurethane is formed.

Examples of the diol having an alkylene group having a carbon number of 8 to 20 include 1,8-octanediol, 2-methyl-1,8-octanediol, 1,9-nonanediol, 1,10-decanediol, 1,11-undecanediol, 1,12-dodecanediol, 1,13-tridecanediol, 1,14-tetradecanediol, 1,16-hexadecanediol, 1,18-octadecanediol, 1,12-octadecanediol, and 1,20-eicosanediol. Of these diols, 1,8-octanediol, 2-methyl-1,8-octanediol, 1,9-nonanediol, 1,10-decanediol, 1,11-undecanediol, and 1,12-dodecanediol are preferable, 2-methyl-1,8-octanediol, 1,9-nonanediol, 1,10-decanediol, and 1,12-dodecanediol are more preferable, and 1,10-decanediol is further preferable due to excellent balance between chemical resistance and low-temperature properties when the polyurethane is formed.

As the polycarbonate diol including the diol having an alkylene group having a carbon number of 3 to 5 and the diol having an alkylene group having a carbon number of 8 to 20 as constituents, diol compounds (may refer to other diol compounds in some cases) other than the diol having an alkylene group having a carbon number of 3 to 5 and the diol having an alkylene group having a carbon number of 8 to 20 may be used. In the case where other diol compounds are used, however, in order to effectively obtain the effect of the invention, the proportion of structural units derived from other diol compounds to the total structural units of the polycarbonate diol is preferably 50% by mole or less, more preferably 30% by mole or less, further preferably 20% by mole or less, and most preferably 10% by mole or less.

The diol having an alkylene groups having a carbon number of 3 to 5 is preferably derived from plants from the viewpoint of reduction in the environmental load. Examples of the diol having an alkylene group having a carbon number of 3 to 5, which can be applied as the plant-derived component, include 1,3-propanediol, 1,4-butanediol, and 1,5-pentanediol.

The diols having an alkylene group having a carbon number of 8 to 20 are preferably derived from plants from the viewpoint of reduction in the environmental load. Examples of the diols having an alkylene group having a carbon number of 8 to 20 that can be applied as the plant-derived compound include 1,9-nonanediol, 1,10-decanediol, 1,11-undecanediol, 1,12-dodecanediol, 1,13-tridecanediol, 1,12-octadecanediol, and 1,20-eicosanediol.

The polycarbonate diol including the plant-derived component used in the moisture-permeable waterproof membrane according to the present invention preferably includes a component derived from 1,10-decanediol as the plant-derived component.

The polycarbonate diol including the plant-derived component used in the moisture-permeable waterproof membrane according to the present invention includes a component derived from 1,10-decanediol and a component derived from 1,4-butanediol, and the molar ratio of 1,10-decanediol to 1,4-butanediol is preferably 1/9 to 8/2. The molar ratio of 1,10-decanediol to 1,4-butanediol is further preferably 1/9 to 5/5 because the moisture-permeable waterproof fabric having excellent water pressure resistance and moisture permeability can be obtained.

Examples of the carbonate compound that can be used in the production of the polycarbonate diol include dialkyl carbonates, diaryl carbonates, and alkylene carbonates. Specific examples of the carbonate compound include dimethyl carbonate, diethyl carbonate, dibutyl carbonate, diphenyl carbonate, and ethylene carbonate and diphenyl carbonate is preferable.

The polyurethane used in the moisture-permeable waterproof membrane according to the present invention can be produced by the reaction of the polyol including the polycarbonate diol having the plant-derived component, polyisocyanate, and a chain extender.

Examples of the polyisocyanate used to produce the polyurethane according to the present invention include aliphatic, alicyclic, and aromatic polyisocyanate compounds. Examples of the polyisocyanate include aliphatic diisocyanates such as 1,4-tetramethylene diisocyanate, 1,5-pentamethylene diisocyanate, 1,6-hexamethylene diisocyanate, 2,2,4-trimethylhexamethylene diisocyanate, 2,4,4-trimethylhexamethylene diisocyanate, lysine diisocyanate, and dimer diisocyanate in which the carboxy groups of dimeric acid are converted into isocyanate groups, alicyclic diisocyanates such as 1,4-cyclohexane diisocyanate, isophorone diisocyanate, 1-methyl-2,4-cyclohexane diisocyanate, 1-methyl-2,6-cyclohexane diisocyanate, 4,4'-dicyclohexylmethane diisocyanate, and 1,3-bis(isocyanate methyl)cyclohexane, and aromatic diisocyanates such as xylylene diisocyanate, 4,4'-diphenyl diisocyanate, 2,4-tolylene diisocyanate, 2,6-tolylene diisocyanate, m-phenylene diisocyanate, p-phenylene diisocyanate, 4,4'-diphenylmethane diisocyanate, 4,4'-diphenyldimethylmethane diisocyanate, 4,4'-dibenzyl diisocyanate, dialkyldiphenylmethane diisocyanates, tetraalkyldiphenylmethane diisocyanates, 1,5-naphthylene diisocyanate, 3,3'-dimethyl-4,4'-biphenylene diisocyanate, polymethylenepolyphenyl isocyanate, phenylene diisocyanate, and m-tetramethylxylylene diisocyanate. These polyisocyanate compounds may be used singly or in combination of two or more of them. Use of isocyanate having a plant-derived component such as plant-derived 1,5-pentamethylene diisocyanate is preferable from the viewpoint of reduction in the environmental load.

Examples of the chain extenders include linear diols such as ethylene glycol, 1,3-propanediol, 1,4-butanediol, 1,5-pentanediol, 1,6-hexanediol, 1,8-octanediol, 1,9-nonanediol, 1,10-decanediol, and 1,12-dodecanediol, diols having branched chains such as 2-methyl-1,3-propanediol, 2,2-dimethyl-1,3-propanediol, 2,2-diethyl-1,3-propanediol, 2-methyl-2-propyl-1,3-propanediol, 2,4-heptanediol, 1,4-dimethylolhexane, 2-ethyl-1,3-hexanediol, 2,2,4-trimethyl-1,3-pentanediol, 2-methyl-1,8-octanediol, 2-butyl-2-ethyl-1,3-propanediol, and a dimer diol, diols having ether groups such as diethylene glycol and propylene glycol, hydroxyamines such as N-methylethanolamine and N-ethylethanolamine, and polyamines such as ethylenediamine, 1,3-diaminopropane, hexamethylenediamine, triethylenetetramine, diethylenetriamine, isophoronediamine, 4,4'-diaminodicyclohexylmethane, 2-hydroxyethylpropylenediamine, di-2-hydroxyethylethylenediamine, di-2-hydroxyethylpropylenediamine, 2-hydroxypropylethylenediamine, di-2-hydroxypropylethylenediamine, 4,4'-diphenylmethanediamine, methylenebis(o-chloroaniline), xylylenediamine, diphenyldiamine, tolylenediamine, hydrazine, piperazine, and N,N'-diaminopiperazine. The chain extender may be used singly or in combination of two or more of them.

As the chain extender, use of at least one kind of plant-derived 1,3-propanediol and 1,4-butanediol is preferable from the viewpoint of reduction in the environmental load.

As the polyurethane used in the moisture-permeable waterproof membrane according to the present invention, the mixture of at least two kinds of the polycarbonate diols having the plant-derived components and the ether-based polyol as the polyol components can be used. Examples of the ether-based polyols include polyethylene glycol, polypropylene glycol, polytetramethylene glycol (PTMG), and copolymerized polyether polyols (EO/PO), and PTMG is preferably used from the viewpoint of improvement in water pressure resistance.

The proportion of the plant-derived components in the polyurethane used for the moisture-permeable waterproof membrane of the moisture-permeable waterproof fabric according to the present invention is preferably large from the viewpoint of reduction in the environmental load. The proportion is preferably 10% by mass or more and 65% by mass or less and further preferably 10% by mass or more and 40% by mass or less from the viewpoint of improvement in performance of the moisture-permeable waterproof membrane.

As a method for obtaining the polyurethane used for the moisture-permeable waterproof membrane of the moisture-permeable waterproof fabric, for example, a method in which the polyol is dissolved in a polar solvent represented by dimethylformamide (DMF) or dimethyl sulfoxide (DMSO) or a solvent such as methyl ethyl ketone (MEK), toluene, or xylene, a divalent isocyanate is added to the solution, the resultant mixture is sufficiently reacted to prepare a prepolymer having an isocyanate or hydroxy group at the end, and thereafter a diol such as ethylene glycol, propylene glycol, or butylene glycol or the divalent isocyanate is added to increase the degree of polymerization by chain extension reaction can be used. The synthesis method of the polyurethane used in the present invention, however, is not limited to the above methods.

### (Moisture-permeable waterproof fabric)

From the viewpoint of practical waterproofing, the moisture-permeable waterproof fabric according to the present invention preferably has a water pressure resistance measured in accordance with JIS-L1092 (2009) of 100 kPa or more and further preferably 150 kPa or more.

The moisture-permeable waterproof fabric preferably has a moisture permeability measured in accordance with Method A-1 in JIS-L1099 (2012) of 104 g/m²·hr or more and further preferably 300 g/m²·hr or more.

The moisture permeability to the polyurethane membrane can be imparted by forming the polyurethane membrane into a porous membrane by a wet process.

The pore diameter and pore distribution of the moisture-permeable waterproof fabric according to the present invention can be freely designed in a range where both performances of the water pressure resistance and the moisture permeability, which are conflicting performances, are satisfied,

In addition, from the viewpoint of durability in practical use, the retention rate of the water pressure resistance after a hydrolysis evaluation test (jungle test) performed for 10 weeks in a high-temperature and high-humidity chamber at 70°C and 95% relative humidity is preferably 60% or more and more preferably 70% or more. Furthermore, the retention rate of the water pressure resistance after a hydrolysis evaluation test (jungle test) performed for 20 weeks in a high-temperature and high-humidity chamber at 70°C and 95% relative humidity is preferably 60% or more and more preferably 65% or more.

The moisture-permeable waterproof fabric according to the present invention is produced by laminating the moisture-permeable waterproof layer made of the polyurethane on the fabric. Examples of the method for laminating the moisture-permeable waterproof membrane include a method in which the fabric is directly applied (a coating method) and a method in which the moisture-permeable waterproof membrane is formed alone and thereafter laminated to the fabric using an adhesive (a bonding method).

As the coating method, various coating methods such as knife coating, knife over roll coating, and reverse roll coating can be employed.

As the bonding method, for example, a method in which the moisture-permeable waterproof membrane formed on release paper by coating or the like is laminated onto the fabric by dotting or whole-surface adhesion using an adhesive, and thereafter the release paper is peeled off is used. The bonding method, however, is not limited to this method.

### [Industrial applicability]

The moisture-permeable waterproof fabric according to the present invention can be suitably used as a clothing material for outdoor wears such as fishing wears and mountain climbing clothes, ski-related wears, windbreakers, athletic wears, golf wears, tennis wears, rain wears, casual coats, indoor and outdoor work clothes, gloves, and shoes.

### [Examples]

Hereinafter, the present invention will be described in more detail with reference to Examples. The present invention, however, is not limited to Examples described below.
The following methods were used as the methods for measuring various performances in the present specification and the like including Examples described below.

### (Measurement methods)

(1) Water pressure resistance: Measured in accordance with JIS-L1092 (2009).
(2) Water permeability: Measured in accordance with Method A-1 in JIS-L1099 (2012).
(3) Texture: Two-stage sensory evaluation was performed based on hand feeling.
   ∘: Soft, x: Hard
(4) Hydrolysis test (jungle test): Hydrolysis was accelerated for 10 weeks in a high-temperature and high-humidity chamber at 70°C and 95% relative humidity and the retention rate of water pressure resistance (ratio of water pressure resistance after the test to water pressure resistance before the test, unit %) was examined. In addition, the retention rate of water pressure resistance after hydrolysis for 20 weeks (ratio of water pressure resistance after the test to water pressure resistance before the test, unit %) in a high-temperature and high-humidity chamber at 70°C and 95% relative humidity was also examined.
(5) Urethane solution stability: The obtained polyurethane resin was cooled to 10°C and the stability was determined based on the flowability at this time.
No fluidity (freezing and gelation): x, Indicates fluidity: ∘

### <Polymerization of Polyurethane resin solution (1) >

Into a 2-liter separable flask, 162 g of a plant-derived polyester polyol (a sebacic acid-based polyester polyol, hydroxy group value 55.1 mg KOH/g, "Ulic" (registered trademark) SE-1903, manufactured by Itoh Oil Chemicals Co., Ltd.) and 250 g of dimethylformamide (hereinafter referred to as "DMF") were charged and dissolved and, while the temperature of the resultant mixture was controlled to 50°C, 101 g of diphenylmethane diisocyanate was added. The obtained mixture was reacted at 50°C for about 1 hour to give a prepolymer. After this operation, the temperature was raised to 60°C and 16 g of ethylene glycol and 60 g of DMF were added. The chain extension reaction was performed at 60°C to polymerize while 420 g of DMF was being separately added associated with viscosity increase. At the time when the viscosity increased to a predetermined viscosity, 9 g of 1,2-propylene glycol and 115 g of DMF were added. The reaction was completed in about 6 to 8 hours to give Urethane resin solution (1) having a urethane resin concentration of 25.0%, a viscosity of 55,000 mPa·s (30°C), and a plant-derived ratio of 45.9%.

### <Polymerization of polyurethane resin solution (2)>

Into a 2-liter separable flask, 130 g of a polycarbonate polyol (a hexamethylene carbonate diol, hydroxy group value 56.5 mg KOH/g, "Nippolan" (registered trademark) 980R, manufactured by Tosoh Corporation ), 32 g of a polyether polyol (a polytetramethylene glycol, hydroxy group value 56.1 mg KOH/g, PTMG-2000M, manufactured by Sanyo Chemical Industries, Ltd.), and 250 g of DMF were charged and dissolved and, while the temperature of the resultant mixture was controlled to 50°C, 87 g of diphenylmethane diisocyanate was added. The obtained mixture was reacted at 50°C for about 1 hour to give a prepolymer. After this operation, the temperature was raised to 60°C and 19.4 g of ethylene glycol and 40 g of DMF were added. The chain extension reaction was performed at 60°C to polymerize while 400 g of DMF was being separately added associated with the viscosity increase. At the time when the viscosity increased to a predetermined viscosity, 9 g of 1,2-propylene glycol and 110 g of DMF were added. The reaction was completed in about 6 to 8 hours to give Urethane resin solution (2) having a urethane resin concentration of 25.0% and a viscosity of 85,000 mPa·s (30°C).

### <Polymerization of polyurethane resin solution (3)>

Into a 2-liter separable flask, 162 g of a polycarbonate polyol (a copolymerized carbonate diol having a molar ratio of 1,4-butanediol/1,10-decanediol = 1/9, hydroxy value 56.5 mg KOH/g, "Beneviol" (registered trademark) NL2090DB, manufactured by Mitsubishi Chemical Corporation, 1,10-decanediol is derived from plants) and 250 g of DMF were charged and dissolved and, while the temperature of the resultant mixture was controlled to 50°C, 87 g of diphenylmethane diisocyanate was added. The obtained mixture was reacted at 50°C for about 1 hour to give a prepolymer. After this operation, the temperature was raised to 60°C and 16 g of ethylene glycol and 40 g of DMF were added. The chain extension reaction was performed at 60°C to polymerize while 400 g of DMF was being separately added associated with the viscosity increase. At the time when the viscosity increased to a predetermined viscosity, 9 g of 1,2-propylene glycol and 110 g of DMF were added. The reaction was completed in about 6 to 8 hours to give Urethane resin solution (3) having a urethane resin concentration of 25.0%, a viscosity of 83,000 mPa·s (30°C), and a plant-derived ratio of 53.2%.

### <Polymerization of polyurethane resin solution (4)>

Into a 2-liter separable flask, 162 g of a polycarbonate polyol (a copolymerized carbonate diol having a molar ratio of 1,4-butanediol/1,10-decanediol = 5/5, hydroxy value 56.5 mg KOH/g, "Beneviol" (registered trademark) NL2050DB, manufactured by Mitsubishi Chemical Corporation, 1,10-decanediol is derived from plants) and 250 g of DMF were charged and dissolved and, while the temperature of the resultant mixture was controlled to 50°C, 87 g of diphenylmethane diisocyanate was added. The obtained mixture was reacted at 50°C for about 1 hour to give a prepolymer. After this operation, the temperature was raised to 60°C and 16 g of ethylene glycol and 40 g of DMF were added. The chain extension reaction was performed at 60°C to polymerize while 400 g of DMF was being separately added associated with the viscosity increase. At the time when the viscosity increased to a predetermined viscosity, 9 g of 1,2-propylene glycol and 110 g of DMF were added. The reaction was completed in about 6 to 8 hours to give Urethane resin solution (4) having a urethane resin concentration of 25.0%, a viscosity of 81,000 mPa·s (30°C), and a plant-derived ratio of 38.4%.

### <Polymerization of polyurethane resin solution (5)>

Into a 2-liter separable flask, 162 g of a polycarbonate polyol (a copolymerized carbonate diol having a molar ratio of 1,4-butanediol/1,10-decanediol = 7/3, hydroxy value 56.5 mg KOH/g, "Beneviol" (registered trademark) NL2030DB, manufactured by Mitsubishi Chemical Corporation, 1,10-decanediol is derived from plants) and 250 g of DMF were charged and dissolved and, while the temperature of the resultant mixture was controlled to 50°C, 87 g of diphenylmethane diisocyanate was added. The obtained mixture was reacted at 50°C for about 1 hour to give a prepolymer. After this operation, the temperature was raised to 60°C and 16 g of ethylene glycol and 40 g of DMF were added. The chain extension reaction was performed at 60°C to polymerize while 400 g of DMF was being separately added associated with the viscosity increase. At the time when the viscosity increased to a predetermined viscosity, 9 g of 1,2-propylene glycol and 110 g of DMF were added. The reaction was completed in about 6 to 8 hours to give Urethane resin solution (5) having a urethane resin concentration of 25.0%, a viscosity of 86,000 mPa·s (30°C), and a plant-derived ratio of 27.4%.

### <Polymerization of Polyurethane resin solution (6)>

Into a 2-liter separable flask, 162 g of a polycarbonate polyol (a copolymerized carbonate diol having a molar ratio of 1,4-butanediol/1,10-decanediol = 9/1, hydroxy value 55.5 mg KOH/g, "Beneviol" (registered trademark) NL2010DB, manufactured by Mitsubishi Chemical Corporation, 1,10-decanediol is derived from plants) and 250 g of DMF were charged and dissolved and, while the temperature of the resultant mixture was controlled to 50°C, 87 g of diphenylmethane diisocyanate was added. The obtained mixture was reacted at 50°C for about 1 hour to give a prepolymer. After this operation, the temperature was raised to 60°C and 16 g of ethylene glycol and 40 g of DMF were added. The chain extension reaction was performed at 60°C to polymerize while 400 g of DMF was being separately added associated with the viscosity increase. At the time when the viscosity increased to a predetermined viscosity, 9 g of 1,2-propylene glycol and 110 g of DMF were added. The reaction was completed in about 6 to 8 hours to give Urethane resin solution (6) having a urethane resin concentration of 25.0%, a viscosity of 85,000 mPa·s (30°C), and a plant-derived ratio of 13.4%.

### <Polymerization of Polyurethane resin solution (7)>

Into a 2-liter separable flask, 130 g of a polycarbonate polyol (a copolymerized carbonate diol having a molar ratio of 1,4-butanediol/1,10-decanediol = 9/1, hydroxy value 54.5 mg KOH/g, "Beneviol" (registered trademark) NL2010DB, manufactured by Mitsubishi Chemical Corporation, 1,10-decanediol is derived from plants), 32 g of a polyether polyol (polytetramethylene glycol, hydroxy group value 56.1 mg KOH/g, PTMG-2000M, manufactured by Sanyo Chemical Industries, Ltd.), and 250 g of DMF were charged and dissolved and, while the temperature of the resultant mixture was controlled to 50°C, 87 g of diphenylmethane diisocyanate was added. The obtained mixture was reacted at 50°C for about 1 hour to give a prepolymer. After this operation, the temperature was raised to 60°C and 16 g of ethylene glycol and 40 g of DMF were added. The chain extension reaction was performed at 60°C to polymerize while 400 g of DMF was being separately added associated with the viscosity increase. At the time when the viscosity increased to a predetermined viscosity, 9 g of 1,2-propylene glycol and 110 g of DMF were added. The reaction was completed in about 6 to 8 hours to give Urethane resin solution (7) having a urethane resin concentration of 25.0%, a viscosity of 86,000 mPa·s (30°C), and a plant-derived ratio of 9.4%.

### <Polymerization of Polyurethane resin solution (8)>

Into a 2-liter separable flask, 162 g of a polycarbonate polyol (a copolymerized carbonate diol having a molar ratio of 1,4-butanediol/1,10-decanediol = 9/1, hydroxy value 55.5 mg KOH/g, "Beneviol" (registered trademark) NL2010DB, manufactured by Mitsubishi Chemical Corporation, 1,10-decanediol is derived from plants) and 250 g of DMF were charged and dissolved and, while the temperature of the resultant mixture was controlled to 50°C, 87 g of diphenylmethane diisocyanate was added. The obtained mixture was reacted at 50°C for about 1 hour to give a prepolymer. After this operation, the temperature was raised to 60°C and 19.6 g of plant-derived 1,3-propylene glycol and 50 g of DMF were added. The chain extension reaction was performed at 60°C to polymerize while 400 g of DMF was being separately added associated with the viscosity increase. At the time when the viscosity increased to a predetermined viscosity, 9 g of 1,2-propylene glycol and 110 g of DMF were added. The reaction was completed in about 6 to 8 hours to give Urethane resin solution (8) having a urethane resin concentration of 25.0%, a viscosity of 92,000 mPa·s (30°C), and a plant-derived ratio of 20.6%.

### [Comparative Example 1]

Nylon ripstop taffeta composed of 50-denier nylon filament yarn was immersed in a diluted solution of 30 g/l of a fluorine-based water repellent ("NK Guard" (registered trademark) S-07, manufactured by Nicca Chemical Co., Ltd.) and squeezed with a mangle so as to be a squeezing ratio of 40%. Thereafter, the squeezed taffeta was dried at 120°C and subjected to thermal treatment at 160°C for 30 seconds to perform water repellent treatment.

Subsequently, to 100 parts by mass of Polyurethane resin solution (1) prepared in <Polymerization of Polyurethane resin solution (1)>, 6 parts by mass of silica fine powder (AEROSIL (registered trademark) R-972, manufactured by Japan Aerosil Co.), 1 part by mass of a fluorinated water repellent (SF-1011, manufactured by Toray Coatex Co., Ltd.), and 1 part by mass of a crosslinking agent ("Coronate" (registered trademark) HX, manufactured by TOSOH CORPORATION) were added. The resultant mixture was sufficiently mixed with 50 parts by mass of DMF and dispersed and stirred with a homo-mixer for about 15 minutes and thereafter stirred to give the liquid composition of the polyurethane resin composition.

This composition was applied onto the above water repellent-processed nylon ripstop taffeta using a knife-over-roll coater at an application amount of 150 g/m². The resultant product was immersed in a bath in which an aqueous solution including DMF in a proportion of 20% by mass serving as a gelation bath is filled for 2 minutes to perform membrane formation by a wet coagulation method. Thereafter, the product was washed with water for 10 minutes and dried with hot air at 140°C to give a moisture-permeable waterproof fabric having a porous structure. With respect to the obtained moisture-permeable waterproof fabrics, water pressure resistance, moisture permeability, and texture were evaluated. In addition, after the jungle test (temperature 70°C and 95% humidity for 10 weeks and 20 weeks) was performed, the water pressure resistance was measured and the retention rate of the water pressure resistance was determined. The results are listed in Table 1.

### [Comparative Example 2]

Nylon ripstop taffeta composed of 50-denier nylon filament yarn was immersed in a diluted solution of 30 g/l of a fluorine-based water repellent ("NK Guard" (registered trademark, the same applies hereinafter) S-07, manufactured by Nicca Chemical Co., Ltd.) and squeezed with a mangle so as to be a squeezing ratio of 40%. Thereafter, the squeezed taffeta was dried at 120°C and subjected to thermal treatment at 160°C for 30 seconds to perform water repellent treatment.

Subsequently, to 100 parts by mass of Polyurethane resin solution (2) prepared in <Polymerization of Polyurethane resin solution (2)>, 6 parts by mass of silica fine powder (AEROSIL (registered trademark) R-972, manufactured by Japan Aerosil Co.), 1 part by mass of a fluorinated water repellent (SF-1011, manufactured by Toray Coatex Co., Ltd.), and 1 part by mass of a crosslinking agent ("Coronate" (registered trademark) HX, manufactured by TOSOH CORPORATION) were added. The resultant mixture was sufficiently mixed with 50 parts by mass of DMF and dispersed and stirred with a homo-mixer for about 15 minutes and thereafter stirred to give the liquid composition of the polyurethane resin composition.

This composition was applied onto the above water repellent-processed nylon ripstop taffeta using a knife-over-roll coater at an application amount of 150 g/m². The resultant product was immersed in a bath in which an aqueous solution including DMF in a proportion of 20% by mass serving as a gelation bath is filled for 2 minutes to perform membrane formation by a wet coagulation method. Thereafter, the product was washed with water for 10 minutes and dried with hot air at 140°C to give a moisture-permeable waterproof fabric having a porous structure. With respect to the obtained moisture-permeable waterproof fabrics, water pressure resistance, moisture permeability, and texture were evaluated. In addition, after the jungle test (temperature 70°C and 95% humidity for 10 weeks and 20 weeks) was performed, the water pressure resistance was measured and the retention rate of the water pressure resistance was determined. The results are listed in Table 1.

### [Example 1]

Nylon ripstop taffeta composed of 50-denier nylon filament yarn was immersed in a diluted solution of 30 g/l of a fluorine-based water repellent ("NK Guard" (registered trademark) S-07, manufactured by Nicca Chemical Co., Ltd.) and squeezed with a mangle so as to be a squeezing ratio of 40%. Thereafter, the squeezed taffeta was dried at 120°C and subjected to thermal treatment at 160°C for 30 seconds to perform water repellent treatment.

Subsequently, to 100 parts by mass of Polyurethane resin solution (4) prepared in <Polymerization of Polyurethane resin solution (4)>, 6 parts by mass of silica fine powder (AEROSIL (registered trademark) R-972, manufactured by Japan Aerosil Co.), 1 part by mass of a fluorinated water repellent (SF-1011, manufactured by Toray Coatex Co., Ltd.), and 1 part by mass of a crosslinking agent ("Coronate" (registered trademark) HX, manufactured by TOSOH CORPORATION) were added. The resultant mixture was sufficiently mixed with 50 parts by mass of DMF and dispersed and stirred with a homo-mixer for about 15 minutes and thereafter stirred to give the liquid composition of the polyurethane resin composition.

This composition was applied onto the above water repellent-processed nylon ripstop taffeta using a knife-over-roll coater at an application amount of 150g/m². The resultant product was immersed in a bath in which an aqueous solution including DMF in a proportion of 20% by mass serving as a gelation bath is filled for 2 minutes to perform membrane formation by a wet coagulation method. Thereafter, the product was washed with water for 10 minutes and dried with hot air at 140°C to give a moisture-permeable waterproof fabric having a porous structure. With respect to the obtained moisture-permeable waterproof fabrics, water pressure resistance, moisture permeability, and texture were evaluated. In addition, after the jungle test (temperature 70°C and 95% humidity for 10 weeks and 20 weeks) was performed, the water pressure resistance was measured and the retention rate of the water pressure resistance was determined. The results are listed in Table 1.

### [Example 2]

Nylon ripstop taffeta composed of 50-denier nylon filament yarn was immersed in a diluted solution of 30 g/l of a fluorine-based water repellent ("NK Guard" (registered trademark) S-07, manufactured by Nicca Chemical Co., Ltd.) and squeezed with a mangle so as to be a squeezing ratio of 40%. Thereafter, the squeezed taffeta was dried at 120°C and subjected to thermal treatment at 160°C for 30 seconds to perform water repellent treatment.

Subsequently, to 100 parts by mass of Polyurethane resin solution (5) prepared in <Polymerization of Polyurethane resin solution (5)>, 6 parts by mass of silica fine powder (AEROSIL (registered trademark) R-972, manufactured by Japan Aerosil Co.), 1 part by mass of a fluorinated water repellent (SF-1011, manufactured by Toray Coatex Co., Ltd.), and 1 part by mass of a crosslinking agent ("Coronate" (registered trademark) HX, manufactured by TOSOH CORPORATION) were added. The resultant mixture was sufficiently mixed with 50 parts by mass of DMF and dispersed and stirred with a homo-mixer for about 15 minutes and thereafter stirred to give the liquid composition of the polyurethane resin composition.

This composition was applied onto the above water repellent-processed nylon ripstop taffeta using a knife-over-roll coater at an application amount of 150g/m². The resultant product was immersed in a bath in which an aqueous solution including DMF in a proportion of 20% by mass serving as a gelation bath is filled for 2 minutes to perform membrane formation by a wet coagulation method. Thereafter, the product was washed with water for 10 minutes and dried with hot air at 140°C to give a moisture-permeable waterproof fabric having a porous structure. With respect to the obtained moisture-permeable waterproof fabrics, water pressure resistance, moisture permeability, and texture were evaluated. In addition, after the jungle test (temperature 70°C and 95% humidity for 10 weeks and 20 weeks) was performed, the water pressure resistance was measured and the retention rate of the water pressure resistance was determined. The results are listed in Table 1.

### [Example 3]

Nylon ripstop taffeta composed of 50-denier nylon filament yarn was immersed in a diluted solution of 30 g/l of a fluorine-based water repellent ("NK Guard" (registered trademark) S-07, manufactured by Nicca Chemical Co., Ltd.) and squeezed with a mangle so as to be a squeezing ratio of 40%. Thereafter, the squeezed taffeta was dried at 120°C and subjected to thermal treatment at 160°C for 30 seconds to perform water repellent treatment.

Subsequently, to 100 parts by mass of Polyurethane resin solution (6) prepared in <Polymerization of Polyurethane resin solution (6)>, 6 parts by mass of silica fine powder (AEROSIL (registered trademark) R-972, manufactured by Japan Aerosil Co.), 1 part by mass of a fluorinated water repellent (SF-1011, manufactured by Toray Coatex Co., Ltd.), and 1 part by mass of a crosslinking agent ("Coronate" (registered trademark) HX, manufactured by TOSOH CORPORATION) were added. The resultant mixture was sufficiently mixed with 50 parts by mass of DMF and dispersed and stirred with a homo-mixer for about 15 minutes and thereafter stirred to give the liquid composition of the polyurethane resin composition.

This composition was applied onto the above water repellent-processed nylon ripstop taffeta using a knife-over-roll coater at an application amount of 150g/m². The resultant product was immersed in a bath in which an aqueous solution including DMF in a proportion of 20% by mass serving as a gelation bath is filled for 2 minutes to perform membrane formation by a wet coagulation method. Thereafter, the product was washed with water for 10 minutes and dried with hot air at 140°C to give a moisture-permeable waterproof fabric having a porous structure. With respect to the obtained moisture-permeable waterproof fabrics, water pressure resistance, moisture permeability, and texture were evaluated. In addition, after the jungle test (temperature 70°C and 95% humidity for 10 weeks and 20 weeks) was performed, the water pressure resistance was measured and the retention rate of the water pressure resistance was determined. The results are listed in Table 1.

### [Example 4]

Nylon ripstop taffeta composed of 50-denier nylon filament yarn was immersed in a diluted solution of 30 g/l of a fluorine-based water repellent ("NK Guard" (registered trademark) S-07, manufactured by Nicca Chemical Co., Ltd.) and squeezed with a mangle so as to be a squeezing ratio of 40%. Thereafter, the squeezed taffeta was dried at 120°C and subjected to thermal treatment at 160°C for 30 seconds to perform water repellent treatment.

Subsequently, to 100 parts by mass of Polyurethane resin solution (7) prepared in <Polymerization of Polyurethane resin solution (7)>, 6 parts by mass of silica fine powder (AEROSIL (registered trademark) R-972, manufactured by Japan Aerosil Co.), 1 part by mass of a fluorinated water repellent (SF-1011, manufactured by Toray Coatex Co., Ltd.), and 1 part by mass of a crosslinking agent ("Coronate" (registered trademark) HX, manufactured by TOSOH CORPORATION) were added. The resultant mixture was sufficiently mixed with 50 parts by mass of DMF and dispersed and stirred with a homo-mixer for about 15 minutes and thereafter stirred to give the liquid composition of the polyurethane resin composition.

This composition was applied onto the above water repellent-processed nylon ripstop taffeta using a knife-over-roll coater at an application amount of 150g/m². The resultant product was immersed in a bath in which an aqueous solution including DMF in a proportion of 20% by mass serving as a gelation bath is filled for 2 minutes to perform membrane formation by a wet coagulation method. Thereafter, the product was washed with water for 10 minutes and dried with hot air at 140°C to give a moisture-permeable waterproof fabric having a homogeneous and fine porous structure.

With respect to the obtained moisture-permeable waterproof fabrics, water pressure resistance, moisture permeability, and texture were evaluated. In addition, after the jungle test (temperature 70°C and 95% humidity for 10 weeks and 20 weeks) was performed, the water pressure resistance was measured and the retention rate of the water pressure resistance was determined. The results are listed in Table 1.

### [Example 5]

Nylon ripstop taffeta composed of 50-denier nylon filament yarn was immersed in a diluted solution of 30 g/l of a fluorine-based water repellent ("NK Guard" (registered trademark) S-07, manufactured by Nicca Chemical Co., Ltd.) and squeezed with a mangle so as to be a squeezing ratio of 40%. Thereafter, the squeezed taffeta was dried at 120°C and subjected to thermal treatment at 160°C for 30 seconds to perform water repellent treatment.

Subsequently, to 100 parts by mass of Polyurethane resin solution (8) prepared in <Polymerization of Polyurethane resin solution (8)>, 6 parts by mass of silica fine powder (AEROSIL (registered trademark) R-972, manufactured by Japan Aerosil Co.), 1 part by mass of a fluorinated water repellent (SF-1011, manufactured by Toray Coatex Co., Ltd.), and 1 part by mass of a crosslinking agent ("Coronate" (registered trademark) HX, manufactured by TOSOH CORPORATION) were added. The resultant mixture was sufficiently mixed with 50 parts by mass of DMF and dispersed and stirred with a homo-mixer for about 15 minutes and thereafter stirred to give the liquid composition of the polyurethane resin composition.

This composition was applied onto the above water repellent-processed nylon ripstop taffeta using a knife-over-roll coater at an application amount of 150 g/m². The resultant product was immersed in a bath in which an aqueous solution including DMF in a proportion of 20% by mass serving as a gelation bath is filled for 2 minutes to perform membrane formation by a wet coagulation method. Thereafter, the product was washed with water for 10 minutes and dried with hot air at 140°C to give a moisture-permeable waterproof fabric having a porous structure. With respect to the obtained moisture-permeable waterproof fabrics, water pressure resistance, moisture permeability, and texture were evaluated. In addition, after the jungle test (temperature 70°C and 95% humidity for 10 weeks and 20 weeks) was performed, the water pressure resistance was measured and the retention rate of the water pressure resistance was determined. The results are listed in Table 1.

**Table 1**

| | | Comparative Example 1 | Comparative Example 2 | Example 1 | Example 2 | Example 3 | Example 4 | Example 5 |
|---|---|---|---|---|---|---|---|---|
| Composition and properties of moisture-permeable waterproof membrane | Polyol component (1) | Sebacic acid-based | C6 Polycarbonate | C10 Diol C4 Diol = 5:5 | C10 Diol C4 Diol = 3:7 | C10 Diol C4 Diol = 1:9 | C10 Diol C4 Diol = 1:9 | C10 Diol C4 Diol = 1:9 |
| | Polyol component (2) | - | PTMG | - | - | - | PTMG | - |
| | Diisocyanate component | MDI | MDI | MDI | MDI | MDI | MDI | MDI |
| | Chain extender component | EG | EG | EG | EG | EG | EG | 1,3-PG |
| | Plant-derived ratio | 46% | 0% | 53% | 53% | 13% | 9% | 21% |
| | Urethane solution stability | OK | OK | NG | NG | OK | OK | OK |
| Properties of moisture-permeable waterproof fabric | Water pressure resistance (kPa) | 108 | 109 | 129 | 111 | 125 | 237 | 183 |
| | Moisture permeability (g/m² ·hr) | 435 | 440 | 358 | 439 | 432 | 448 | 432 |
| | Water pressure resistance (Ten weeks after jungle) | 10% or less | 84% | 79% | 80% | 78% | 79% | 72% |
| | Water pressure resistance (Twenty weeks after jungle) | 10% or less | 80% | 74% | 77% | 77% | 75% | 69% |
| | Texture | ∘ | ∘ | × | × | ∘ | ∘ | ∘ |

A moisture-permeable waterproof fabric including the plant-derived component but having low hydrolysis resistance as listed in Comparative Example 1 in Table 1, or a moisture-permeable waterproof fabrics hiving high hydrolysis resistance but not including the plant-derived component as listed in Comparative Example 2 in Table 1 has existed in conventional technologies. A product including the plant-derived components and at the same time having excellent hydrolysis resistance, and hiving excellent mass productivity has not existed.

As described in Examples 1, 2, 3, 4, and 5, the products that contribute to the reduction in the environmental load through carbon neutrality due to including the plant-derived components and, at the same time, are durable in practical use for a long period of time due to high hydrolysis resistance, which is a feature of the polycarbonate-based urethane, can be produced.

Furthermore, as described in Example 4, copolymerization of the plant-derived polycarbonate-based polyol and PTMG allows a useful moisture-permeable waterproof fabric having higher water pressure resistance to be obtained.

In addition, as described in Example 5, use of a plant-derived chain extender at the time of polyurethane polymerization allows the plant-derived ratio to be further increased while the high hydrolysis resistance is being retained, and thus contributes to further reduction in the environmental load.

## Claims

1. A moisture-permeable waterproof fabric comprising: a porous moisture-permeable waterproof membrane on at least one surface of a fabric, wherein
polyurethane forming the moisture-permeable waterproof membrane is synthesized using a polyol including a polycarbonate diol having a plant-derived component.

2. The moisture-permeable waterproof fabric according to claim 1, wherein the polycarbonate diol includes a component derived from plant-derived 1,10-decanediol.

3. The moisture-permeable waterproof fabric according to claim 2, wherein the polycarbonate diol includes a component derived from 1,10-decanediol and a component derived from 1,4-butanediol, and a molar ratio of 1,10-decanediol to 1,4-butanediol is 1/9 to 8/2.

4. The moisture-permeable waterproof fabric according to claim 3, wherein the molar ratio of 10-decanediol to 1,4-butanediol is 1/9 to 5/5.

5. The moisture-permeable waterproof fabric according to any one of claims 1 to 4, wherein the polyol is a mixture of at least two kinds of the polycarbonate diol and an ether-based polyol.

6. The moisture-permeable waterproof fabric according to any one of claims 1 to 4, wherein the polyurethane uses at least one kind of plant-derived 1,3-propanediol and 1,4-butanediol as a chain extender.

7. The moisture-permeable waterproof fabric according to any one of claims 1 to 6, wherein water pressure resistance of the moisture-permeable waterproof membrane is 10 kPa or more.

8. The moisture-permeable waterproof fabric according to any one of claims 1 to 6, wherein water pressure resistance of the moisture-permeable waterproof membrane is 100 kPa or more.

9. The moisture-permeable waterproof fabric according to any one of claims 1 to 6, wherein water pressure resistance of the moisture-permeable waterproof membrane is 150 kPa or more.

10. The moisture-permeable waterproof fabric according to any one of claims 1 to 9, wherein a retention rate of water pressure resistance after 10 weeks elapses in a hydrolysis evaluation test at a temperature of 70°C and a humidity of 95% is 60% or more.

11. The moisture-permeable waterproof fabric according to any one of claims 1 to 9, wherein a retention rate of water pressure resistance after 20 weeks elapses in a hydrolysis evaluation test at a temperature of 70°C and a humidity of 95% is 60% or more.
